# EUROPÄISCHE PATENTSCHRIFT

(11) **EP 1 526 223 B1**
(45) Veröffentlichungstag und Bekanntmachung des Hinweises auf die Patenterteilung: **17.08.2011**
(21) Anmeldenummer: 04020806.8
(22) Anmeldetag: 01.09.2004
(51) Int. Cl.: E03F 1/00

(54) **Rigolenanordnung mit Rigole und Schacht**
Leaching chamber device with leaching chamber and manhole
Dispositif d'infiltration avec chambre d'infiltration et regard

(30) Priorität: 15.10.2003 DE 10348024
(43) Veröffentlichungstag der Anmeldung: 27.04.2005
(73) Patentinhaber: FRÄNKISCHE ROHRWERKE Gebr. Kirchner GmbH & Co. KG, 97486 Königsberg (DE)
(72) Erfinder: Adams, Dietmar, 01328 Dresden (DE); Kriese, Jens, 14621 Schönwalde (DE)
(74) Vertreter: Herzog, Markus

(56) Entgegenhaltungen:
- EP-A- 1 416 099
- WO-A-00/40811
- WO-A-01/29334
- DE-U1- 20 119 076
- DE-U1- 20 303 343
- DE-U1- 29 620 170
- DE-U1- 29 923 191
- JP-A- 9 296 486
- US-A1- 2003 095 838
- US-B1- 6 626 609

## Beschreibung

Die vorliegende Erfindung betrifft eine Rigolenanordnung mit einer unterirdischen Rigole, welche durch eine Rigolenwandung begrenzt ist, zur vorübergehenden Speicherung von Flüssigkeit, und mit wenigstens einem Schacht, welcher durch eine Schachtwandung begrenzt ist und mit der Rigole in Verbindung steht.

Zum Zwecke der Entsorgung von Oberflächenwasser, beispielsweise Regenwasser, wird insbesondere in größeren Ortschaften und Städten üblicherweise die Kanalisation verwendet. Diese Art der Entsorgung ist jedoch relativ teuer, da die Querschnitte der Kanalisationsleitungen derart bemessen sein müssen, dass beispielsweise auch das bei einem Platzregen anfallende Regenwasser problemlos abgeführt werden kann. Zudem ist diese Art der Entsorgung des Regenwassers unökologisch, da das Regenwasser nicht in dem Erdreich versickern kann, auf dem es niedergegangen ist. Es wurde daher in der Vergangenheit bereits nach Möglichkeiten gesucht, Regenwasser auch dann in den Boden einleiten zu können, wenn dessen Oberfläche durch Gebäude, Straßen, Wege und dergleichen versiegelt ist.

Hierzu wurde beispielsweise in der EP 1 260 640 A1 eine Rigolenanordnung der eingangs genannten Art vorgeschlagen. Die unterirdische Rigole, ein im Wesentlichen hohler Raum, dient zur Aufnahme von Flüssigkeit, insbesondere von Wasser, die dort gespeichert und in der Regel durch Versickerung an das umgebende Erdreich abgegeben wird. Für den Zulauf der Flüssigkeit zu der Rigole sowie um eine Zugänglichkeit der Rigole für Wartungs- und Reinigungsarbeiten bereitzustellen, weist die bekannte Rigolenanordnung zwei Schächte auf, von welchen je ein Längsendbereich mit der Rigole in Verbindung steht und von denen der jeweils andere Längsendbereich zur Außenumgebung führt. Anstelle der Außenumgebung kann der jeweils andere Längsendbereich auch mit einem weiteren Hohlraum verbunden sein.

Nachteilig an der bekannten Rigolenanordnung ist, dass die Rigole zwischen den beiden Schächten angeordnet ist, was den Bauaufwand zur Bildung der Rigolenanordnung im Boden wesentlich erhöht. Wenn beispielsweise Regenwasser in der Rigole gespeichert werden soll, muss die Rigolenanordnung abgedichtet werden, in der Regel mit einer Foliendichtung. Dabei verursacht die bekannte Anordnung der Schächte neben der Rigole einen erhöhten Abdichtungsaufwand, beispielsweise durch das Eindichten von Rohren in der Folie. Außerdem muss zusätzlich nicht nur das für die Bildung der Rigole, sondern zusätzlich auch das für die Bildung der Schächte erforderliche Erdvolumen ausgehoben werden. Dies verteuert die Herstellungskosten weiter, da zum einen mehr Aushubarbeit anfällt und zum anderen ein größeres Erdvolumen entsorgt werden muss.

Die WO 00/40811 offenbart eine unterirdische Rigole gemäß dem Oberbegriff von Anspruch 1, welche mit einem Schottermaterial gefüllt ist. In die Rigole wird Regenwasser über einen seitlichen Zulaufschacht eingeleitet, während ein Entnahmeschacht die Rigole von oben vertikal durchsetzt.

Die WO 01/29334 offenbart ferner eine Rigolenanordnung, welche aus einer Mehrzahl von aneinander gefügten Rigolenfüllkörpern gebildet ist, wobei einander entsprechende Seiten der Rigolenfüllkörper gleiche Abmessungen aufweisen. Die Rigolenfüllkörper sind durch gitterartige Seitenwände begrenzt und haben quaderförmige Gestalt.

Eine weitere Rigolenanordnung ist aus der US-B-6626609 bekannt. Die Rigolenanordnung ist durch eine Rigolenwandung begrenzt und umfasst eine Mehrzahl gestapelter Rigolenfüllkörper, deren einander entsprechende Seiten im Wesentlichen gleiche Abmessungen aufweisen. Die Rigolenfüllkörper sind zueinander versetzt übereinander gestapelt. Die Rigolenanordnung weist jedoch genan wie die aus WO 01/29334 bekannte keinen Schacht auf.

Es ist daher Aufgabe der vorliegenden Erfindung, eine Rigolenanordnung anzugeben, bei der nicht nur die Rigole an sich, sondern auch der Schacht mit aufeinander abgestimmten Füllkörpern gebildet werden.

Diese Aufgabe wird erfindungsgemäß gelöst durch eine Rigolenanordnung nach Anspruch 1.

Als Schacht im Sinne dieser Anmeldung ist ein von einer Wand begrenzter Hohlraum zu verstehen, dessen zum umgebenden Boden- oder Erdreich oder auch Rigolenbereich hin begrenzende Wand die Schachtwand ist. Da durch den Schacht die Rigole, ebenfalls ein Hohlraum, erreichbar ist, ist stets eine Berührlinie zwischen Schachtwandung und Rigolenwandung vorhanden.

Der Schacht kann dabei längs seines Verlaufs seine Querschnittsform oder/und seine Querschnittsabmessungen ändern. Der Schacht kann etwa gebildet sein durch einfachen Erdaushub, d.h. durch ein vom umgebenden Erdreich gebildetes Loch. Um ein Einstürzen des Schachtes zu verhindern, ist der Schacht vorzugsweise ausgekleidet. Zur Auskleidung können beispielsweise Schachtfüllkörper verwendet werden, wie sie weiter unten beschrieben sind.

So kann beispielsweise ein Schacht in einem oberen Bereich durch massive ringförmige Betonschalen bis zur Rigolenwandung hin gebildet sein und sich im Rigolenvolumen unter Veränderung seines Querschnitts durch einen Durchgang fortsetzen, welcher durch Weglassen von Rigolenfüllkörpern gebildet ist. Im oberen Teil bilden dann die Außenumfangsfläche der Betonschalen, im Rigoleninneren die Begrenzungsflächen der den Durchgang einfassenden Rigolenfüllkörper die Schachtwandung.

Mit "normaler" Projektion in eine Ebene ist eine Projektion in die betreffende Ebene mit einer zu dieser Ebene normalen, d.h. orthogonalen Projektionsrichtung bezeichnet.

In der Regel wird zur Bildung einer Rigole von der Erdoberfläche aus in Richtung der Schwerkraft in die Tiefe gegraben und Erdvolumen ausgehoben. Das dabei auszuhebende Erdvolumen wird maßgeblich bestimmt durch die Größe der Fläche einer normalen Projektion der Rigole in eine zur Schwerkraftwirkungsrichtung orthogonale Ebene. Ordnet man nun den Schacht bezüglich der Rigole erfindungsgemäß derart an, dass der Schacht die Rigolenwandung erreicht oder sogar durchstößt, sodass die Schachtwandung und die Rigolenwandung sich längs einer Berührlinie berühren, wobei eine normale Projektion der Berührlinie von Schacht und Rigolenwandung in eine zur Schwerkraftwirkung orthogonale Ebene innerhalb der zuvor genannten Projektion der Rigole in diese Ebene liegt, so kann der zur Schachtbildung notwendige zusätzliche Erdaushub wenigstens reduziert oder sogar vollständig vermieden werden.

Die Berührlinie bezeichnet den Bereich, längs dem sich Schachtwandung und Rigolenwandung berühren. Im Falle eines in die Rigole unmittelbar einmündenden Schachts, welcher bis zur Rigolenwandung reicht, ist die Berührlinie mit dem Mündungsumriss identisch. Durchstößt der Schacht die Rigolenwandung, entspricht die Berührlinie dem Umriss des von der Schachtwandung "ausgeschnittenen" Rigolenwandungsbereichs.

Der wenigstens eine Schacht kann die Rigole zur Bildung eines unter der Rigole gelegenen Pumpensumpfes auch durchsetzen, sodass eine eintrittsseitige und eine austrittsseitige Berührlinie von Schacht- und Rigolenwandung vorhanden sein kann. In diesem Fall ist die Lage der eintrittsseitigen Berührlinie maßgebend.

Bei der erfindungsgemäßen Anordnung des wenigstens einen Schachts kann somit zumindest ein Schachtabschnitt in dem in Schwerkraftwirkungsrichtung über der Rigole liegenden Erdraum angeordnet sein. Für diesen Schachtabschnitt ist dann kein eigener Erdaushub notwendig. Aus Gründen einer Minimierung der zur Bildung der Rigolenanordnung erforderlichen Erdarbeiten ist es jedoch vorteilhaft, wenn der wenigstens eine Schacht möglichst vollständig durch den in Schwerkraftwirkungsrichtung über der Rigole liegenden Erdraum verläuft.

Da bei der Bildung einer Rigole von der Bodenoberfläche aus in der Regel in Schwerkraftrichtung in die Tiefe gegraben wird, kann ein zusätzlicher Erdaushub für den Schacht vollständig vermieden werden, wenn der Schacht im Wesentlichen in Schwerkraftwirkungsrichtung verläuft. Dies erleichtert außerdem die Bildung des Schachts.

Grundsätzlich kann die Rigole eine beliebige Gestalt aufweisen, abhängig von dem Zweck der Rigole und den Boden- und Bauverhältnissen in dem die Rigole umgebenden Bodenraum. Eine einfache und deshalb kostengünstig herzustellende Rigole hat eine im Wesentlichen quaderförmige Gestalt. In diesem Falle ist die normale Projektion der Rigole in die zur Schwerkraftwirkungsrichtung orthogonale Ebene eine Grundrissfläche der Rigole. Eine derartige Rigole ist mit den üblichen Erdbearbeitungsmaschinen besonders einfach herstellbar.

Einen sehr guten Kompromiss zwischen Kosten und nutzbarem Rigolenvolumen bieten die Rigolenfüllkörper, welche in die Rigole eingestellt werden. Einander entsprechende Seiten der Rigolenfüllkörper weisen im Wesentlichen gleiche Abmessungen auf, sodass gleichartige Rigolenfüllkörper stapelbar sind. Erfindungsgemäß besonders bevorzugt einsetzbare Rigolenfüllkörper, welche im Wesentlichen als Hohlkörper ausgebildet sind und eine Basiswandung sowie eine Mehrzahl von Verbindungswandungen umfassen, die von der Basiswandung abstehen, wobei zumindest ein Teil dieser Wandungen für Flüssigkeit durchlässig ausgebildet ist und diese Wandungen wenigstens ein Flüssigkeitaufnahmevolumen begrenzen, sind ebenfalls aus der EP 1 260 640 A1 bekannt. Insbesondere der Inspektionskanal der aus der EP 1 260 640 A1 bekannten Rigolenfüllkörper ist von großem Vorteil, da durch ihn die Rigole inspiziert, gewartet und gereinigt werden kann.

Ist eine Rigole mit derartigen Rigolenfüllkörpern so ausgefüllt, dass das von den Rigolenfüllkörpern eingenommene Volumen das Rigolenvolumen bildet, so definiert eine Einhüllende der in der Rigole angeordneten Rigolenfüllkörper im Wesentlichen die Rigolenwandung.

Aus Gründen einer einfachen und kostengünstigen modularen Bauweise ist es im Falle einer mit Rigolenfüllkörpern gefüllten Rigole vorteilhaft, wenn der Schachtquerschnitt, in einer zu einer Anordnungsebene der Rigolenfüllkörper in der Rigole parallelen Schnittebene betrachtet, eine Länge aufweist, welche der Länge eines Rigolenfüllkörpers oder einem ganzzahligen Vielfachen davon entspricht, und eine Breite aufweist, welche der Breite eines Rigolenfüllkörpers oder einem ganzzahligen Vielfachen davon entspricht. Dadurch ist es in einfacher Weise möglich, den Schacht selbst mit Rigolenfüllkörpern abzustützen, was die Kosten für die Bildung der Rigolenanordnung weiter vermindert. Die Anordnungsebene ist dabei eine Schmiegeebene an einen Rigolengrund, auf dem die Rigolenfüllkörper angeordnet werden. In den meisten Fällen wird die Anordnungsebene zumindest näherungsweise orthogonal zur Schwerkraftwirkungsrichtung verlaufen. "Länge" und "Breite" sind zueinander orthogonale Raumrichtungen in der Anordnungsebene. Die Abmessung orthogonal dazu, welche also in der Regel in Schwerkraftwirkungsrichtung verläuft, wird in dieser Anmeldung als "Höhe" bezeichnet.

Der Schacht umfasst wenigstens einen Schachtfüllkörper. Dadurch wird der Schachtquerschnitt bzw. das Schachtvolumen gesichert, wobei der Schachtfüllkörper im Hinblick auf die Funktionalität des Schachtes ausgebildet sein kann, welche im Gegensatz zur Rigole anstatt auf Flüssigkeitsspeicherung auf Flüssigkeitsdurchleitung und Bereitstellung eines Durchgangs zur Rigole ausgelegt ist. Hierzu genügt es in einem einfachen Fall, wenn der Schachtfüllkörper wenigstens eine zwischen einer Schachtfüllkörper-Oberseite und einer Schachtfüllkörper-Unterseite verlaufende Seitenwandung aufweist, wobei in diesem Falle Oberseite und Unterseite im verlegten Zustand des Schachtfüllkörpers betrachtet sind. Im Übrigen ändert weder die Anordnung von Rigolenfüllkörpern in der Rigole, noch die Anordnung von Schachtfüllkörpern im Schacht etwas an der Qualität von Rigole und Schacht als Hohlraum. Derartige Füllkörper nehmen zur Stabilisierung und Abstützung von Rigole und Schacht weniger als die Hälfte von deren Volumina ein, sodass Rigole und Schacht überwiegend zum Durchgang oder/und Durchfluss hohl bleiben. Selbst eine durch eine Kiesaufschüttung abgestützte Rigole ist im Sinne dieser Anmeldung noch als Hohlraum anzusehen.

So kann der Schacht einen einzigen, etwa rohrförmigen, Schachtfüllkörper umfassen, bevorzugt umfasst er jedoch eine Mehrzahl von Schachtfüllkörpern, da dadurch die Schachtlänge individuell an die vorliegenden geometrischen Verhältnisse angepasst werden kann. Auch der Schachtfüllkörper ist vorzugsweise stapelbar. Besonders bevorzugt umfasst der Schacht eine Mehrzahl von gestapelten Schachtfüllkörpem, da sich ein Schacht durch Stapeln derartiger Schachtfüllkörper sehr einfach, schnell und kostengünstig bilden lässt. Außerdem kann so ein Schacht bereits vor einem Verlegen im Erdreich als Baueinheit vormontiert werden. Es wird ergänzend hierzu ausdrücklich auf die zuvor gegebene Definition des Schachts und die dort angegebenen Beispiele verwiesen.

Weist der Schacht Schachtfüllkörper auf, deren Wände zumindest abschnittsweise flüssigkeitsdurchlässig sein können und bilden diese in einem Abschnitt das Schachtvolumen dieses Abschnitts, so definiert in diesem Abschnitt eine Einhüllende der Schachtfüllkörper die Schachtwandung.

Gemäß einer vorteilhaften Weiterbildung der vorliegenden Erfindung können die Schachtfüllkörper an den zur Verbindung mit weiteren Schachtfüllkörpern vorgesehenen Seiten mit Verbindungsmitteln versehen sein. Derartige Verbindungsmittel können im einfachsten Fall Nuten und Vorsprünge sein.

Besonders vorteilhaft ist es, an jedem Schachtfüllkörper an einer Stapelseite einen Vorsprung und an der entgegengesetzten Stapelseite eine Ausnehmung vorzusehen, sodass im gestapelten Zustand der Vorsprung des einen Schachtfüllkörpers in die Ausnehmung des angrenzenden Schachtfüllkörpers eingreift. Um die Verbindung zweier aufeinanderfolgender Schachtfüllkörper sichern zu können, können die Verbindungsmittel mit Verriegelungs- oder Verrastungsmitteln versehen sein. Derartige Mittel können beispielsweise durch eine Rastnase an der einen Stapelseite sowie durch eine Rastnut an der entgegengesetzten anderen Stapelseite realisiert sein. Im verbundenen Zustand verrastet die Rastnase des einen Schachtfüllkörpers dann in der Rastnut des angrenzenden Schachtfüllkörpers und hintergreift so Schachtfüllkörpermaterial des angrenzenden Schachtfüllkörpers, was zu einem verbesserten Halt der Schachtfüllkörper führt. Dadurch ist es noch sicherer möglich, Schachtfüllkörper bereits vor dem Verlegen in der Erde vorzumontieren.

Es kann daran gedacht sein, dass der Schacht nicht an der Rigolenwandung endet, sondern in das Rigolenvolumen hineinragt. Ein "Hineinragen" des Schachtes kann dabei erreicht werden etwa durch Anordnen von Schachtfüllkörpern im Rigolenvolumen oder/und durch Bildung eines Hohlraums in Verlängerung des Schachts, etwa durch Weglassen von Rigolenfüllkörpern oder/und durch Fortsetzen der Schachtwandung in das Rigolenvolumen hinein. Im Falle einer Verwendung von Schachtfüllkörpern in der Rigole kann die modulare Bauweise der Rigolenfüllkörper in vorteilhafter Weise ausgenutzt werden, wenn der Schachtfüllkörper eine Höhe aufweist, welche der Höhe eines Rigolenfüllkörpers oder eines ganzzahligen Vielfachen davon entspricht. In diesem Fall können Rigolenfüllkörper einfach durch Schachtfüllkörper ersetzt werden.

Es kann aber auch einfach, wie zuvor beschrieben, der Schacht in einem ersten Schachtabschnitt mit beispielsweise rohrförmigen Schachtfüllkörpern mit großem Querschnitt gebildet sein, etwa stapelbaren Betonringen, welche auf Rigolenfüllkörpern in der Rigole aufliegen können. In einem zweiten, folgenden Schachtabschnitt kann der Schacht andere Schachtfüllkörper mit anderem, in der Regel kleinerem Querschnitt, umfassen oder unter Weglassung von Rigolenfüllkörpern definiert sein.

So kann der erste Abschnitt als Einstiegsbereich nutzbar sein und die Zugänglichkeit der Rigole verbessern, ohne dass man ganz in die Rigole einsteigen muss.

Die Schachtfüllkörper können gemäß einer Weiterbildung der vorliegenden Erfindung mit flüssigkeitsundurchlässigen, vollwandigen oder/und flüssigkeitsdurchlässigen, insbesondere gitterförmigen Seitenwandungen ausgebildet sein. Vorzugsweise werden Schachtfüllkörper mit vollwandigen Seitenwandungen außerhalb des Rigolenvolumens eingesetzt, um den Eintritt von Schmutz und Erdreich in den Schacht zu verhindern. Innerhalb des Rigolenvolumens liegende oder anzuordnende Schachtfüllkörper sind dagegen vorzugsweise mit flüssigkeitsdurchlässigen Seitenwandungen ausgebildet, um einen möglichst guten Flüssigkeitsaustausch innerhalb der Rigole zu erreichen.

Besonders vorteilhaft weisen die Schachtfüllkörper, welche im Inneren des Rigolenvolumens angeordnet sind, Aussparungen in den Seitenwandungen derart auf, dass durch sie Inspektionskanäle in den Rigolenfüllkörpern bzw. in der Rigole unmittelbar erreichbar und zugänglich sind. Dann kann auf Verbindungselemente, wie Rohrstücke, Adapter und dgl. zwischen Inspektionskanal und Schacht verzichtet werden. Wenn die Aussparungen die gleiche Querschnittsform und -größe wie die Inspektionskanäle aufweisen, können die durch den Inspektionskanal geschaffenen Inspektionsmöglichkeiten uneingeschränkt mit geringem Aufwand genutzt werden.

Wie bereits erwähnt wurde, hat der Schacht eine andere funktionelle Aufgabe zu erfüllen als die Rigole. Dazu sind in den Schächten von Rigolenanordnungen in der Regel Funktionselemente angeordnet. Bei einer wie oben beschrieben modularen Bauweise des Schachtes können Kosten weiter dadurch eingespart werden, dass der Schachtfüllkörper ein Funktionselement aufweist. Wird dies nicht gewünscht, etwa um die Flexibilität in der Auswahl von Funktionselementen zu erhalten und diese erst dann einzubauen, wenn die individuellen Anforderungen an die jeweilige Rigolenanordnung bekannt sind, kann der Montageaufwand jedoch verringert werden, wenn der Schachtfüllkörper zur Anbringung eines Funktionselements ausgebildet ist. Hierzu kann der Schachtfüllkörper Anbringungsausbildungen aufweisen zur Befestigung von Funktionselementen an diesen, sodass Funktionselemente mit den daran üblicherweise vorgesehenen Befestigungsstellen zur Montage lediglich an die vorgesehen Anbringungsausbildungen angehalten und an diesen befestigt werden müssen. Eine Montage der Funktionselemente am Schachtfüllkörper wird dadurch sehr vereinfacht.

Das Funktionselement kann eine Strömungsführung oder wenigstens ein Strömungsführungsabschnitt zur Durchleitung der Flüssigkeit sein. Alternativ oder zusätzlich kann das Funktionselement eine Pumpe zur Unterstützung oder Ausbildung einer Flüssigkeitsströmung sein. Weiterhin kann das Funktionselement zusätzlich oder alternativ eine Filteranordnung zur Reinigung der Flüssigkeit sein, etwa von Regenwasser. Schließlich kann daran gedacht sein, als Funktionselement eine Drossel zur Verringerung der Flüssigkeitsströmung vorzusehen. Die Aufzählung von Funktionselementen ist nicht abschließend.

Zur besseren Leitung der Flüssigkeit zur Rigole hin oder von dieser weg kann der Schachtfüllkörper, da die Flüssigkeitsströmung zumindest eine Komponente in Richtung der Schwerkraft aufweist, eine Strömungsführung oder einen Strömungsführungsabschnitt umfassen, welcher, bei Betrachtung des im Boden verlegten Zustands, zwischen einer Schachtfüllkörper-Oberseite und einer Schachtfüllkörper-Unterseite verläuft. Die Strömungsführung bzw. der Strömungsführungsabschnitt kann im kostengünstigsten Fall durch ein einfaches Rohr gebildet sein.

Der Schacht kann an der Rigolenwandung enden, sodass der Schacht mit seiner Schachtwandung direkt an die Rigole angesetzt ist. Der Schacht kann jedoch auch in das Volumen der Rigole hineinreichen, was zum Vorteil hat, dass etwa Reinigungslanzen zur Reinigung der Rigole gezielt an eine gewünschte Stelle des von der Rigole begrenzten Raums eingebracht werden können.

Zur Bildung eines Pumpensumpfes, welcher geodätisch tiefer liegt als die Rigole, kann der Schacht die Rigole durchsetzen, sodass ein Längsendbereich des Schachts unter der Rigole liegt.

Ein besonderer Vorteil der erfindungsgemäßen Rigolenanordnung wird erreicht bei Rigolen, die zur Umgebung hin zumindest abschnittsweise abgedichtet sind, da der erforderliche Abdichtaufwand verringert ist. So kann bei einer Wasserspeicherrigole ein Großteil der Rigolenwandung abgedichtet sein, wobei eine Rigolenabdichtung in einem Deckenbereich der Rigolenwandung hin entbehrlich ist. Liegt daher die zuvor beschriebene Berührlinie im Deckenbereich der Rigolenwandung, kann in vorteilhafterweise eine gesonderte Abdichtung des Schachts bzw. des Eintrittsbereichs des Schachts in die Rigole entbehrlich sein, da nur in seltenen Fällen Flüssigkeit in der Rigole tatsächlich bis zum Deckenbereich steigt. Es sei erwähnt, dass auch Versickerungsrigolen, etwa in seitlicher Richtung, abgedichtet sein können, wobei auch hier eine Abdichtung im Deckenbereich der Rigolenwandung entbehrlich sein kann.

Gemäß einer Weiterbildung der Erfindung kann eine Rigolenanordnung zwei oder mehr Schächte aufweisen, um die Zugänglichkeit des Rigolenvolumens zu verbessern.

Wie oben beschrieben wurde, umfasst der Schacht die oben bezeichneten Schachtfüllkörper. Derartige Schachtfüllkörper können besonders günstig mit hoher Passgenauigkeit und guter Verwitterungsbeständigkeit in ausreichender Stückzahl als Kunststoffspritzgussteil oder/und als Kunststoff-Rotationsteil oder/und als Schweißkonstruktion aus Plattenware hergestellt werden. Es sind jedoch auch Schachtfüllkörper, insbesondere rohrförmige, aus Betonguss denkbar.

Die vorliegende Erfindung wird im Folgenden anhand der beiliegenden Zeichnungen näher erläutert werden. Es stellt dar:
- Fig. 1: einen Querschnitt durch eine erste Ausführungsform einer erfindungsgemäßen Rigolenanordnung,
- Fig. 2: eine schematische Querschnittsansicht einer zweiten Ausfüh- rungsform einer erfindungsgemäßen Rigolenanordnung sowie
- Fig. 3: eine schematische Draufsicht der Rigolenanordnung von Fig. 2.

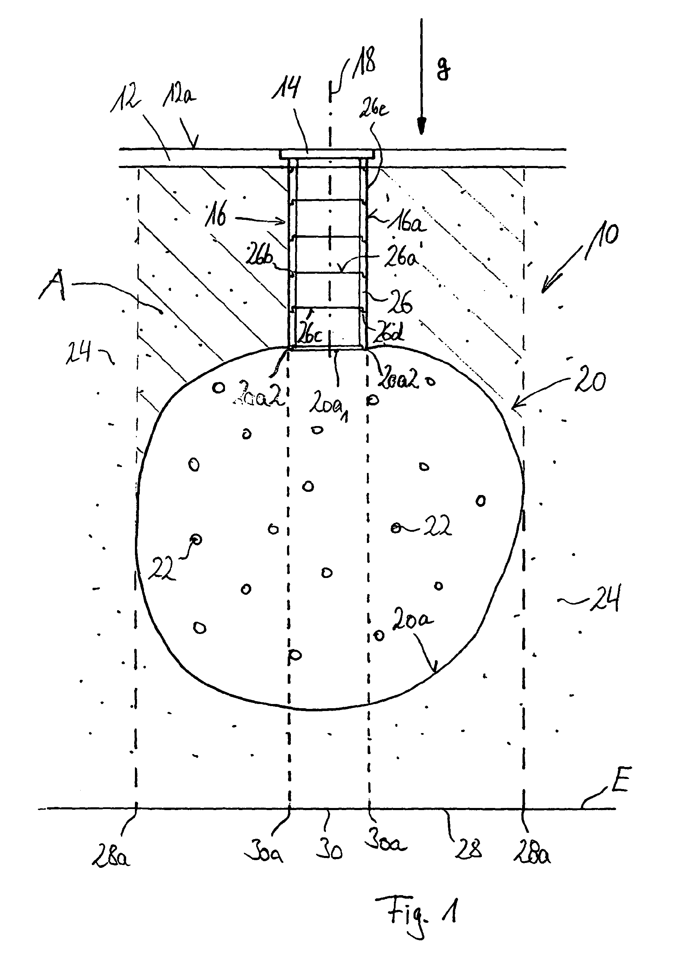

In Fig. 1 ist ein Querschnitt durch eine allgemein mit 10 bezeichnete erfindungsgemäße Rigolenanordnung dargestellt. Die Schnittebene ist dabei so gelegt, dass sie in der durch den Pfeil g angedeuteten Schwerkraftwirkungsrichtung verläuft.

Fig. 1 zeigt einen versiegelten Boden 12, welcher an seiner Bodenoberseite 12a begehbar und befahrbar ist. Der versiegelte Boden 12 kann beispielsweise ein asphaltierter Parkplatz sein. In dem versiegelten Boden 12 ist ein Schachtdeckel 14 zur Abdeckung eines kreiszylindrischen Schachts 16 vorgesehen. Die Längsachse 18 des zylindrischen Schachts 16 verläuft in Schwerkraftwirkungsrichtung g und liegt in der zuvor angesprochenen Schnittebene. Der zylindrische Schacht 16 führt zu einer unterirdischen Rigole 20, welche eine sphärenähnliche Gestalt aufweist. Mit dieser eher untypischen sphärischen Gestalt soll aufgezeigt werden, dass die erfindungsgemäße Anordnung eines Schachts bezüglich einer Rigole allgemein gültig und anwendbar ist.

Die Rigole 20 ist mit einer lockeren Schüttung aus Kies 22 aufgeschüttet. Der Kies 22 ist durch die im Rigolenvolumen eingezeichneten Kreise angedeutet. Die Einhüllende der Kiesschüttung markiert die Rigolenwandung 20a.

Der Schacht 16 und die Rigole 20 sind von Erdreich 24 umgeben. Das Erdreich 24 ist durch Punktierung angedeutet.

Der Schacht 16 ist aus einfachen kreiszylindrischen Schachtfüllkörpern 26 aufgebaut, welche in Richtung der Schachtlängsachse 18 gestapelt sind. Zu diesem Zweck ist jeder Schachtfüllkörper 26 an seiner Oberseite 26a bei Betrachtung eines im Erdreich 24 verlegten Zustands mit einem umlaufenden Vorsprung 26b versehen. Ebenso ist jeder Schachtfüllkörper 26 an seiner Unterseite 26c bei Betrachtung eines im Erdreich 24 verlegten Zustands mit einer umlaufenden Ausnehmung 26d versehen, mit welcher im gestapelten Zustand ein Vorsprung 26b eines benachbarten Schachtfüllkörpers in Eingriff ist. Die Außeneinhüllende des kreiszylindrischen Mantels des Schachtes 16b definiert die Schachtwandung 16a. Der Schachtfüllkörper weist eine von der Oberseite 26a zur Unterseite 26c reichende Seitenwandung 26e auf.

Durch den Schachtdeckel 14, welcher etwa ein Gullydeckel sein kann, kann Regenwasser von der Bodenoberfläche 12a in den Schacht 16 eintreten, diesen durchfließen und in die Rigole 20 gelangen. Dort wird das Wasser zwischengespeichert und durch Versickerung langsam an das Erdreich 24 abgegeben. Durch den Schacht 16 ist die Rigole, etwa zur Überprüfung ihres Zustands oder für Ausbesserungsarbeiten, erreichbar.

Der Vorteil der vorliegenden Erfindung liegt darin, dass zur Ausbildung des Schachtes 16 kein zusätzlicher Erdaushub notwendig ist. Zur Bildung der Rigolenanordnung muss das Volumen der Rigole 20 und das in Schwerkraftwirkungsrichtung g darüberliegende Erdreich 24 im schraffierten Bereich A ausgehoben werden. Die Fläche orthogonal zur Schwerkraftwirkungsrichtung g des auszuhebenden Bereichs A des Erdreichs 24 ist dabei bestimmt durch eine Projektion der Rigole 20 in Richtung der Schwerkraftwirkungsrichtung g in eine zur Schwerkraftwirkungsrichtung g orthogonale Ebene E. Die Ebene E liegt orthogonal zur Zeichenebene der Fig. 1.

Der Schacht ist dabei derart angeordnet, dass der von der Schachtwandung 16a ausgeschnittene Bereich 20a1 der Rigolenwandung 20a bzw. eine Berührlinie 20a2 einer Berührung von Schachtwandung 16a und Rigolenwandung 20a derart angeordnet ist, dass eine Projektion der Berührlinie 20a2 bzw. des ausgeschnittenen Rigolenwandungsbereich 20a1 in Schwerkraftwirkungsrichtung g in die zur Schwerkraftwirkungsrichtung g orthogonale Ebene E innerhalb einer Projektion der Rigole 20 in Schwerkraftwirkungsrichtung g in diese Ebene liegt. Die Projektion der Rigole 20 in die Ebene E ist in Fig. 1 mit 28 bezeichnet, die Projektion des von der Schachtwandung 16a ausgeschnittenen Rigolenwandungsbereichs 20a1 ist in Fig. 1 mit 30 bezeichnet. Dabei umgibt die Randlinie 28a der Projektion 28 der Rigole 20 die Linie 30a der Projektion der Berührlinie 20a2. Hierdurch wird gewährleistet, dass selbst dann, wenn der Schacht 16 nicht in Schwerkraftwirkungsrichtung g, sondern schräg dazu verlaufen würde, zumindest ein signifikanter Abschnitt des Schachts 16 durch den Erdaushubbereich A hindurch verlaufen würde, sodass kaum oder gar keine zusätzlichen Erdaushubarbeiten für den Schacht 16 notwendig sind. Weiterhin wird durch diese Anordnung des Schachts 16 eine Abdichtung des Schachteintritts in die Rigole 20 vereinfacht.

Die Abdichtung kann unter Umständen sogar entbehrlich sein, wenn, wie im in Fig. 1 gezeigten Beispiel, der ausgeschnittene Rigolenwandungsabschnitt 20a1 in einem oberen Bereich, vorzugsweise am geodätisch höchsten Punkt, der Rigole 20 vorgesehen ist, da in der Rigole 20 gespeichertes Wasser von unten nach oben steigt und somit den Schachteintrittsbereich erst sehr spät und nur in seltenen Fällen erreicht.

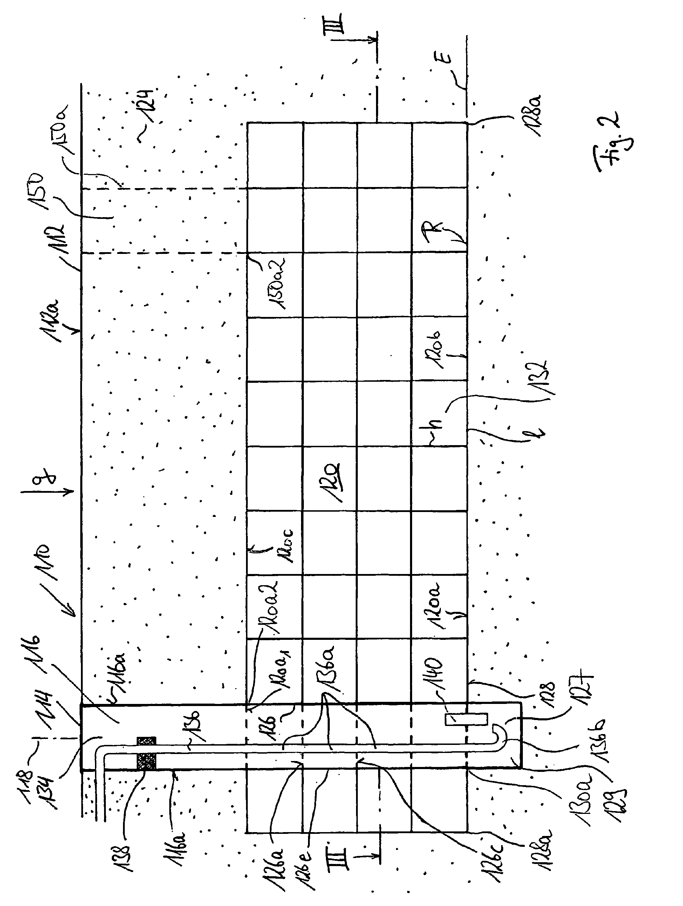

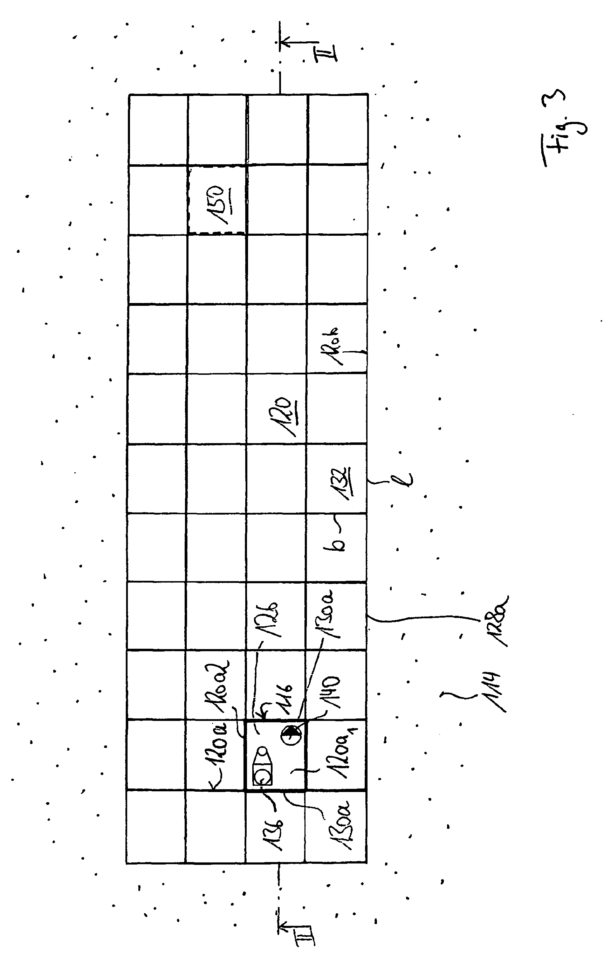

In den Fig. 2 und 3 ist eine bevorzugte Ausführungsform einer erfindungsgemäßen Rigolenanordnung sowie von erfindungsgemäßen Schachtfüllkörpern schematisch dargestellt. Fig. 2 zeigt einen Querschnitt durch die Rigolenanordnung und den umgebenden Erdbereich längs einer in Fig. 3 angedeuteten Ebene II-II. Figur 3 zeigt einen Längsschnitt durch die Rigolenanordnung entlang der in Fig. 2 angedeuteten Ebene III-III.

Gleiche Bauteile wie in Fig. 1 sind in der Ausführungsform der Fig. 2 und 3 mit gleichen Bezugszeichen versehen, jedoch erhöht um die Zahl 100. Zur ausführlichen Beschreibung der Bauteile wird auf die im Zusammenhang mit Fig. 1 gegebene Beschreibung verwiesen. In Fig. 2 ist eine quaderförmige Rigole 120 gezeigt, welche durch gestapelte Rigolenfüllkörper 132 mit im Wesentlichen gleichen entsprechenden Abmessungen abgestützt ist. Die unterste Lage von Rigolenfüllkörpern ist auf der Anordnungsebene R, einer Schmiegeebene an den Rigolenboden 120b, angeordnet. Die Anordnungsebene R ist im gezeigten Beispiel orthogonal zur Schwerkraftwirkungsrichtung orientiert. Die Rigolenfüllkörper 132 weisen eine Länge I, eine Höhe h sowie eine Breite b (s. Fig. 3) auf. Sie sind in an sich bekannter Weise, wie etwa in der EP 1 260 640 A1 beschrieben ausgebildet. Die Rigole 120 ist im in dem Fig. 2 und 3 dargestellten Beispiel vollständig von Erdreich 124 umgeben. Sie kann jedoch auch mit dem Rigolenboden 120b auf einem eigens aufgeschütteten Kiesbett ruhen. Wiederum bestimmt die Einhüllende der Füllkörper 132 die Rigolenwandung 120a.

Vom Erdboden 112 aus bis zum Rigolenboden 120b der Rigole 120 reicht ein Schacht 116. Der Schacht 116 ist wiederum durch eine Schachtabdeckung 114 abgedeckt.

In dem Bereich, in welchem sich der Schacht innerhalb des Rigolenvolumens befindet, ist der Schacht aus Schachtfüllkörpern 126 gebildet, welche gleiche Abmessungen der Länge I, der Breite b und der Höhe h aufweisen, wie die in der Rigole 120 verwendeten Rigolenfüllkörper 132. Damit ist gewährleistet, dass bei der Vorbereitung der Rigole bereits ein Schacht vorbereitet und in die aufgestapelten Rigolenfüllkörper eingesetzt werden kann, ohne in irgendeiner Weise zu stören. Vom Boden 112 bis zur Rigole 120 ist ein weiterer Schachtfüllkörper 134 angeordnet, welcher eine größere Höhe als die Schachtfüllkörper 126 im Rigolenvolumen aufweist. Anstelle des Schachtfüllkörpers 134 kann jedoch auch der außerhalb des Rigolenvolumens liegende Schachtabschnitt aus Schachtfüllkörpern 126 aufgebaut sein. Die Längsachse 118 des Schachts 116 verläuft wiederum im Wesentlichen in Schwerkraftwirkungsrichtung g.

In dem Schacht 116 sind Funktionselemente vorgesehen, nämlich eine Flüssigkeitsleitung 136, eine kombinierte Pumpen- und Filtereinheit 138 sowie ein Füllstandsmessgerät 140.

Um die Modularität dieses Füllkörpersystems für eine Rigolenanordnung zu erhalten, umfassen die drei obersten Schachtfüllkörper 126 Leitungsabschnitte 136a als Funktionselemente, welche von der Schachtfüllkörper-Oberseite 126a zur Schachtfüllkörper-Unterseite 126c reichen. Im gestapelten Zustand der Schachtfüllkörper 126 schließen diese Rohrleitungsabschnitte 136a formschlüssig aneinander an und bilden eine durchgehende Flüssigkeitsleitung.

Der unterste Schachtfüllkörper 127 weist einen gekrümmten Leitungsauslass 136b auf, von welchem aus Flüssigkeit in einen von dem untersten Schachtfüllkörper 127 gebildeten Pumpensumpf 129 eintritt oder aus diesem über die Pumpen- und Filtereinheit 138 abgeführt wird.

Die Flüssigkeitsmessvorrichtung 140 kann beispielsweise ein Druckmessgerät sein, welches über nicht dargestellte Leitungen das Ergebnis einer Druckmessung an die Bodenoberfläche liefert, aus welcher ein Wasserstand in der Rigole 120 errechnet werden kann.

Die Leitungsabschnitte 136a können fest mit dem Schachtfüllkörper verbunden oder sogar einstückig mit diesem ausgebildet sein, etwa dann, wenn der Schachtfüllkörper im Kunststoffspritzgussverfahren hergestellt ist. Darüber hinaus können an den Schachtfüllkörpern standardisierte Anbringungsstellen, die mit entsprechenden Befestigungsstellen an Funktionselementen zusammenpassen, vorgesehen sein, insbesondere bei im Kunststoffspritzgussverfahren hergestellten Schachtfüllkörpern, um daran Funktionselemente, wie etwa die Pumpen- und Filtereinheit 138, eine Pumpe alleine, eine Filtereinheit alleine oder die Messvorrichtung 140 in einfacher Weise anbringen zu können.

Es sei ergänzend darauf hingewiesen, dass die Leitung 136 zu einem weiteren Schacht oder zu einem Ventil an der Oberfläche oder zu einem Gully oder dergleichen führen kann.

Über den Schacht 116 ist im übrigen die Rigole 120 erreichbar, sodass durch den Schacht 116 Reinigungs- oder/und Inspektionsmittel, wie etwa Reinigunglanzen, Kameraroboter, in die Rigole eingeführt werden können. Bei ausreichend großen Abmessungen kann auch ein Mensch den Schacht 116 zur Rigole 120 hinabsteigen.

Wie im Ausführungsbeispiel der Fig. 1 liegt auch bei dem Ausführungsbeispiel der Fig. 2 die Projektion der Berührlinie 120a2 zwischen Schachtwandung 116a und Rigolenwandung 120a in Schwerkraftwirkungsrichtung g in eine zur Schwerkraftwirkungsrichtung g orthogonale Ebene E innerhalb einer Projektion der Rigole 120 in Schwerkraftwirkungsrichtung g in diese Ebene E. Im vorliegenden Falle der Fig. 2 und 3 entspricht die Projektion der Rigole 120 in die zur Schwerkraftwirkungsrichtung g orthogonale Ebene E dem Grundriss der Rigole 120. Die Außenkontur der Projektion der Rigole 120 ist mit 128a bezeichnet. Wiederum liegt der Schachteintritt in die Rigole 120 vorteilhaft an der Oberseite der Rigole 120, d.h. im Bereich der Rigolendecke 120c. Für den Schacht 116 ist kein zusätzlicher Erdaushub notwendig. Darüber hinaus sind Arbeiten zur Abdichtung der Rigole 120 verglichen mit Rigolenanordnungen mit Schacht und Rigole des Standes der Technik stark vereinfacht.

Strichliniert ist ein zweiter Schacht 150 angedeutet, welcher zusätzlich zu dem Schacht 116 in dem anderen Längsendbereich der Rigole 120 vorgesehen sein kann, um sicherzustellen, dass jeder Punkt in der Rigole durch einen Schacht erreichbar ist. Die Berührlinie der Schachtwandung 150a des Schachts 150 mit der Rigolenwandung 120a ist mit 150a2 bezeichnet. Die Schächte 116 und 150 sind zueinander im Wesentlichen parallel. Im Übrigen kann der Schacht 150 entsprechend dem Schacht 116 aufgebaut sein.

Erfindungsgemäß soll auch eine Projektion des Schachts in Schwerkraftwirkungsrichtung umfasst sein, derart, dass ein Teil der Projektion der Berührlinie in Schwerkraftwirkungsrichtung mit dem Rand der Projektion der Rigole zusammenfällt.

## Patentansprüche

1. Rigolenanordnung mit einer unterirdischen Rigole (20; 120), welche durch eine Rigolenwandung (20a; 120a) begrenzt ist, zur vorübergehenden Speicherung von Flüssigkeit, wobei die Rigolenanordnung wenigstens einen Schacht (16; 116, 150) umfasst, welcher durch eine Schachtwandung (16a; 116a) begrenzt ist und mit der Rigole (20; 120) in Verbindung steht,
wobei sich die Schachtwandung (16a; 116a, 150a) und die Rigolenwandung (20a; 120a) längs einer Berührlinie (20a2; 120a2, 150a2) berühren, wobei der Schacht (16; 116, 150) bezüglich der Rigole (20; 120) derart angeordnet ist, daβ eine normale Projektion (30a; 130a) der Berührlinie (20a2; 120a, 150a2) in eine zur Schwerkraftwirkungsrichtung (g) orthogonale Ebene (E) innerhalb einer normalen Projektion (28; 128) der Rigole (20; 120) in diese Ebene (E) liegt,
**dadurch gekennzeichnet, dass** die Rigole (120), vorzugsweise gestapelte, Rigolenfüllkörper (132) umfasst, bei welchen einander entsprechende Seiten (I, b, h) gleiche Abmessungen (I, b, h) aufweisen, und
dass der Schacht (16; 116) wenigstens einen, vorzugsweise stapelbaren, Schachtfüllkörper (126, 134) umfasst,
wobei der Schachtfüllkörper (126, 134), in einer zu einer Anordnungsebene (R) der Rigolenfüllkörper (122) in der Rigole (120) parallelen Schnittebene betrachtet, eine Länge aufweist, welche der Länge (I) eines Rigolenfüllkörpers (132) oder einem ganzzahligen Vielfachen davon entspricht, und eine Breite (B) aufweist, welche der Breite (b) eines Rigolenfüllkörpers (132) oder einem ganzzahligen Vielfachen davon entspricht.

2. Rigolenanordnung nach Anspruch 1,
**dadurch gekennzeichnet,**
**dass** der Schacht als vormontierte Baueinheit bereitgestellt ist.

3. Rigolenanordnung nach Anspruch 1 oder Anspruch 2,
**dadurch gekennzeichnet,**
**dass** der Schacht (16; 116, 150) durch den in Schwerkraftwirkungsrichtung (g) über der Rigole (20; 120) liegenden Erdraum (A) verläuft, vorzugsweise vollständig in diesem Erdraum (A) angeordnet ist.

4. Rigolenanordnung nach einem der vorhergehende Ansprüche,
**dadurch gekennzeichnet,**
**dass** der Schacht (16; 116, 150) in Schwerkraft-wirkungsrichtung (g) verläuft.

5. Rigolenanordnung nach einem der vorhergehenden Ansprüche,
**dadurch gekennzeichnet,**
**dass** der Schacht (116) die Rigole (120) zur Bildung eines Pumpensumpfes (129) durchsetzt.

6. Rigolenanordnung nach einem der vorhergehenden Ansprüche,
**dadurch gekennzeichnet,**
**dass** die Rigole (120) quaderförmig ist.

7. Rigolenanordnung nach einem der vorhergehenden Ansprüche,
**dadurch gekennzeichnet,**
**dass** der Schachtfüllkörper (26; 126, 127), bei Betrachtung eines im Boden verlegten Zustands, wenigstens eine zwischen einer Schachtfüllkörper-Oberseite (26a; 126a) und einer Schachtfüllkörper-Unterseite (26c; 126c) verlaufende Seitenwandung (26e; 126e) aufweist.

8. Rigolenanordnung nach einem der vorhergehenden Ansprüche,
**dadurch gekennzeichnet,**
**dass** eine Mehrzahl von Schachtfüllkörpern (26; 126, 127) vorgesehen ist, wobei ein Schachtfüllkörper (26; 126, 127) an den zur Verbindung mit in verlegtem Zustand benachbarten Schachtfüllkörpern (26; 126, 127, 134) vorgesehen Stapelseiten (26a, 26d) mit Verbindungsmitteln (26b, 26d) versehen ist.

9. Rigolenanordnung nach Anspruch 8,
**dadurch gekennzeichnet,**
**dass** jeder Schachtfüllkörper (26) an einer Stapelseite (26a) einen Vorsprung (26b) und an einer entgegengesetzten Stapelseite (26c) eine Ausnehmung (26d) derart aufweist, dass im gestapelten Zustand der Vorsprung (26b) eines Schachtfüllkörpers (26) in die Ausnehmung (26d) eines benachbarten Schachtfüllkörpers (26) eingreift.

10. Rigolenanordnung nach Anspruch 8 oder 9,
**dadurch gekennzeichnet,**
**dass** die Verbindungsmittel (26b, 26d) mit Verriegelungsmitteln oder Verrastungsmitteln versehen sind.

11. Rigolenanordnung nach Anspruch 10,
**dadurch gekennzeichnet,**
**dass** die Verrastungsmittel eine Rastnase an der einen Stapelseite und eine Rastnut zum Eingriff durch die Rastnase an der entgegengesetzten anderen Stapelseite umfassen.

12. Rigolenanordnung nach einem der vorhergehenden Ansprüche,
**dadurch gekennzeichnet,**
**dass** der Schachtfüllkörper (126) eine Höhe (h) aufweist, welche der Höhe (h) eines Rigolenfüllkörpers (132) oder eines ganzzahligen Vielfachen davon entspricht.

13. Rigolenanordnung nach einem der Ansprüche 1 bis 12,
**dadurch gekennzeichnet,**
**dass** der Schachtfüllkörper (126, 127, 134) wenigstens ein Funktionselement (136, 138, 140) aufweist.

14. Rigolenanordnung nach einem der Ansprüche 1 bis 12,
**dadurch gekennzeichnet,**
**dass** der Schachtfüllkörper (26; 126, 127, 134) zur Anbringung eines Funktionselements ausgebildet ist.

15. Rigolenanordnung nach Anspruch 14,
**dadurch gekennzeichnet,**
**dass** der Schachtfüllkörper (26; 126, 127 134) Anbringungsausbildungen aufweist zur Befestigung von Funktionselementen an diesen.

16. Rigolenanordnung nach einem der Ansprüche 13 bis 15,
**dadurch gekennzeichnet,**
**dass** das Funktionselement (136, 138, 140) eine Strömungsführung(136) oder ein Strömungsführungsabschnitt (136a) oder eine Pumpe (138) oder eine Filteranordnung (138) oder eine Drossel ist.

17. Rigolenanordnung nach einem der Ansprüche 1 bis 13,
**dadurch gekennzeichnet,**
**dass** der Schachtfüllkörper (126) eine Strömungsführung oder einen Strömungsführungsabschnitt (136a) umfasst, welcher, bei Betrachtung des im Boden verlegten Zustands, zwischen einer Schachtfüllkörper-Oberseite (126a) und einer Schachtfüllkörper-Unterseite (126c) verläuft.

18. Rigolenanordnung nach einem der vorhergehenden Ansprüche,
**dadurch gekennzeichnet,**
**dass** die Rigole (20; 120) zumindest abschnittsweise zur Umgebung hin abgedichtet ist.

19. Rigolenanordnung nach einem der vorhergehenden Ansprüche,
**dadurch gekennzeichnet,**
**dass** die Berührlinie (20a2; 120a2, 150a2) in einem Deckenbereich (120c) der Rigolenwandung (120a) liegt.

20. Rigolenanordnung nach einem der vorhergehenden Ansprüche,
**dadurch gekennzeichnet,**
**dass** sie zwei oder mehr voneinander mit Abstand angeordnete Schächte (116, 150) aufweist.

## Claims

1. A drainage trench assembly with an underground drainage trench (20;120), which is bounded by a drainage trench wall (20a;120a), for the temporary storage of liquid, wherein the drainage trench assembly comprises at least one shaft (16;116,150) which is bounded by a shaft wall (16a;116a) and is in communication with the drainage trench (20;120),
wherein the shaft wall (16a;116a,150a) and the drainage trench wall (20a;120a) are in contact along a contact line (20a2;120a2,150a2), wherein the shaft (16;116,150) is arranged in such a way relative to the drainage trench (20;120), and wherein a normal projection (30a;130a) of the contact line (20a2;120a,150a2) lies in a plane (E) orthogonal to the direction of gravity force action (g) within a normal projection (28;128) of the drainage trench (20;120) in this plane (E),
**characterised in that** the drainage trench (120) comprises, preferably stacked, drainage trench filling members (132) in which mutually corresponding sides (l,b,h) have equal dimensions (l,b,h), and
**in that** the shaft (16;116) comprises at least one, preferably stackable, shaft filling member (126;134),
wherein the shaft filling member (126,134), viewed in a sectional plane parallel to a layout plane (R) of the drainage trench filling members (122) in the drainage trench (120), is of a length which corresponds to the length (I) of a drainage trench filling member. (132) or to an integral multiple thereof, and is of a width (B) which corresponds to the width (b) of a drainage trench filling member (132) or to an integral multiple thereof.

2. A drainage trench assembly according to Claim 1,
**characterised in that** the shaft is made available as a preassembled unit.

3. A drainage trench assembly according to Claim 1 or Claim 2,
**characterised in that** the shaft (16;116,150) extends through the ground space (A) situated above the drainage trench (120) in the direction of gravity force action (g), preferably is disposed entirely in this ground space (A).

4. A drainage trench assembly according to any one of the preceding Claims, **characterised in that** the shaft (16;116,150) extends in the direction of gravity force action (g).

5. A drainage trench assembly according to any one of the preceding Claims, **characterised in that** the shaft (116) passes through the drainage trench (120) to form a pump sump (129).

6. A drainage trench assembly according to any one of the preceding Claims, **characterised in that** the drainage trench (120) is rectangular.

7. A drainage trench assembly according to any one of the preceding Claims, **characterised in that**, when viewed in an installed state in the ground, the shaft filling member (26;126,127) has at least one side wall (26e;126e) extending between a shaft filling member upper side (26a;126a) and a shaft filling member underside (26c;126c).

8. A drainage trench assembly according to any one of the preceding Claims, **characterised in that** a plurality of shaft filling members (26;126;127) is provided, wherein one shaft filling member (126;134) is provided with connecting means (26b,26d) on the stack sides (26a,26d) provided for connection to shaft filling members (26;126,127,134) which are adjacent in the installed state.

9. A drainage trench assembly according to Claim 8, **characterised in that** each shaft filling member (26) has on one stack side (26a) a projection (26b) and on the opposite stack side (26c) a recess (26d) so that, in the stacked state, the projection (26b) of one shaft filling member (26) engages in the recess (26d) of an adjacent shaft filling member (26).

10. A drainage trench assembly according to Claim 8 or 9, **characterised in that** the connecting means (26b,26d) are provided with locking means or latching means.

11. A drainage trench assembly according to Claim 10, **characterised in that** the latching means comprise a detent lug on one stack side and a detent groove for engagement by the detent lug on the opposite other stack side.

12. A drainage trench assembly according to any one of the preceding Claims, **characterised in that** the shaft filling member (126) is of a height (h) which corresponds to the height (h) of a shaft filling member (132) or an integral multiple thereof.

13. A drainage trench assembly according to any one of the Claims 1 to 12, **characterised in that** the shaft filling member (126,127,134) has at least one operational element (136,138,140).

14. A drainage trench assembly according to any one of the Claims 1 to 12, **characterised in that** the shaft filling member (26;126,127,134) is designed for the mounting of an operational element.

15. A drainage trench assembly according to Claim 14, **characterised in that** the shaft filling member (26;126,127,134) has mounting formations for the fastening of operational elements thereto.

16. A drainage trench assembly according to any one of Claims 13 to 15, **characterised in that** the operational element (136,138,140) is a flow duct (136) and/or a flow-conducting section (136a) and/or a pump (138) and/or a filter assembly (138) and/or a throttle.

17. A drainage trench assembly according to any one of Claims 1 to 13, **characterised in that** shaft filling member (126) comprises a flow duct or a flow-conducting section (136a) which, when viewed in the installed state in the ground, extends between a shaft filling member upper side (126a) and a shaft filling member underside (126c).

18. A drainage trench assembly according to any one of the preceding Claims, **characterised in that** the drainage trench (20;120) is sealed at least in stages from the surroundings.

19. A drainage trench assembly according to any one of the preceding Claims, **characterised in that** the contact line (20a2;120a2,150a2) lies in an overhead zone (120c) of the drainage trench wall (120a).

20. A drainage trench assembly according to any one of the preceding Claims, **characterised in that** it has two or more shafts (116,150) arranged spaced apart.

## Revendications

1. Ensemble de rigoles présentant une rigole enterrée (20 ; 120) qui est délimitée par une paroi de rigole (20a ; 120a) pour l'accumulation temporaire de liquide, l'ensemble de rigoles comprenant au moins un puits (16 ; 116, 150) qui est délimité par une paroi de puits (16a ; 116a) et est en liaison avec la rigole (20 ; 120),
la paroi de puits (16a ; 116a, 150a) et la paroi de rigole (20a ; 120a) se touchant le long d'une ligne de contact (20a2 ; 120a2, 150a2), le puits (16 ; 116, 150) étant disposé de telle manière par rapport à la rigole (20 ; 120), et une projection normale (30a ; 130a) de la ligne de contact (20a2 ; 120a, 150a2) se trouvant dans un plan (E) orthogonal au sens d'action de la force de gravité (g) dans une projection normale (28 ; 128) de la rigole (20 ; 120) dans ce plan (E),
**caractérisé en ce que** la rigole (120) comporte des corps de remplissage de rigole de préférence empilés (132), pour lesquels les côtés (l, b, h) correspondant les uns aux autres présentent des dimensions identiques (l, b, h), et
**en ce que** le puits (16 ; 116) comporte au moins un corps de remplissage de puits (126, 134) de préférence empilable,
le corps de remplissage de puits (126, 134) présentant, considéré dans un plan de coupe parallèle à un plan de disposition (R) du corps de remplissage de rigole (122) dans la rigole (120), une longueur qui correspond à la longueur (l) d'un corps de remplissage de rigole (132) ou à un multiple entier de celle-ci, et une largeur (B) qui correspond à la largeur (b) d'un corps de remplissage de rigole (132) ou à un multiple entier de celle-ci.

2. Ensemble de rigoles selon la revendication 1,
**caractérisé en ce**
**que** le puits est mis à disposition sous la forme d'une unité structurelle prémontée.

3. Ensemble de rigoles selon la revendication 1 ou 2,
**caractérisé en ce**
**que** le puits (16 ; 116, 150) s'étend au travers de l'espace terrestre (A) situé au-dessus de la rigole (20 ; 120) dans le sens d'action de la force de gravité (g), de préférence disposé entièrement dans cet espace terrestre (A).

4. Ensemble de rigoles selon l'une quelconque des revendications précédentes,
**caractérisé en ce**
**que** le puits (16 ; 116, 150) s'étend dans le sens d'action de la force de gravité (g).

5. Ensemble de rigoles selon l'une quelconque des revendications précédentes,
**caractérisé en ce**
**que** le puits (116) traverse la rigole (120) pour la formation d'un puisard d'aspiration (129).

6. Ensemble de rigoles selon l'une quelconque des revendications précédentes,
**caractérisé en ce**
**que** la rigole (120) est parallélépipédique.

7. Ensemble de rigoles selon l'une quelconque des revendications précédentes,
**caractérisé en ce**
**que** le corps de remplissage de puits (26 ; 126, 127) présente, considéré à l'état posé dans le sol, au moins une paroi latérale (26e ; 126e) s'étendant entre un côté supérieur de corps de remplissage de puits (26a ; 126a) et un côté inférieur de corps de remplissage de puits (26c ; 126c).

8. Ensemble de rigoles selon l'une quelconque des revendications précédentes,
**caractérisé en ce**
**qu'**une pluralité de corps de remplissage de puits (26 ; 126, 127) est prévue, le corps de remplissage de puits (26 ; 126, 127) étant pourvu de moyens de liaison (26b, 26d) sur les côtés empilés (26a, 26d) prévus pour la liaison avec des corps de remplissage de puits (26 ; 126, 127, 134) contigus à l'état posé.

9. Ensemble de rigoles selon la revendication 8,
**caractérisé en ce**
**que** chaque corps de remplissage de puits (26) présente, sur un côté à empiler (26a), une saillie (26b) et sur un côté à empiler (26c) opposé, un évidement (26d) de telle manière qu'à l'état empilé, la saillie (26b) d'un corps de remplissage de puits (26) s'engage dans l'évidement (26d) d'un corps de remplissage de puits contigu (26).

10. Ensemble de rigoles selon la revendication 8 ou 9,
**caractérisé en ce**
**que** les moyens de liaison (26b, 26d) sont pourvus de moyens de verrouillage ou de moyens d'encliquetage.

11. Ensemble de rigoles selon la revendication 10,
**caractérisé en ce**
**que** les moyens d'encliquetage comportent un nez d'encliquetage sur un côté à empiler et une rainure d'encliquetage pour l'engagement par le nez d'encliquetage sur l'autre côté opposé à empiler.

12. Ensemble de rigoles selon l'une quelconque des revendications précédentes,
**caractérisé en ce**
**que** le corps de remplissage de puits (126) présente une hauteur (h) qui correspond à la hauteur (h) d'un corps de remplissage de rigole (132) ou à un multiple entier de celle-ci.

13. Ensemble de rigoles selon l'une quelconque des revendications 1 à 12,
**caractérisé en ce**
**que** le corps de remplissage de puits (126, 127, 134) présente au moins un élément fonctionnel (136, 138, 140).

14. Ensemble de rigoles selon l'une quelconque des revendications 1 à 12,
**caractérisé en ce**
**que** le corps de remplissage de puits (26 ; 126, 127, 134) est réalisé pour le montage d'un élément fonctionnel.

15. Ensemble de rigoles selon la revendication 14,
**caractérisé en ce**
**que** le corps de remplissage de puits (26 ; 126, 127, 134) présente des réalisations de montage pour la fixation d'éléments fonctionnels sur celui-ci.

16. Ensemble de rigoles selon l'une quelconque des revendications 13 à 15,
**caractérisé en ce**
**que** l'élément fonctionnel (136, 138, 140) est un guidage d'écoulement (136) et/ou une section de guidage d'écoulement (136a) et/ou une pompe (138) et/ou un ensemble de filtrage (138) et/ou un étranglement.

17. Ensemble de rigoles selon l'une quelconque des revendications 1 à 13,
**caractérisé en ce**
**que** le corps de remplissage de puits (126) comporte un guidage d'écoulement ou une section de guidage d'écoulement (136a) qui s'étend, considéré à l'état posé dans le sol, entre un côté supérieur du corps de remplissage de puits (126a) et un côté inférieur du corps de remplissage de puits (126c).

18. Ensemble de rigoles selon l'une quelconque des revendications précédentes,
**caractérisé en ce**
**que** la rigole (20 ; 120) est rendue étanche au moins en partie envers l'environnement.

19. Ensemble de rigoles selon l'une quelconque des revendications précédentes,
**caractérisé en ce**
**que** la ligne de contact (20a2 ; 120a2, 150a2) se trouve dans une zone de plafond (120c) de la paroi de rigole (120a).

20. Ensemble de rigoles selon l'une quelconque des revendications précédentes,
**caractérisé en ce**
**qu'**il présente deux ou plusieurs puits (116, 150) espacés l'un de l'autre.
